# FASCICULE DE BREVET EUROPEEN

(11) **EP 1 371 815 B1**
(45) Date de publication et mention de la délivrance du brevet: **15.08.2007**
(21) Numéro de dépôt: 03291395.6
(22) Date de dépôt: 12.06.2003
(51) Int. Cl.: F01D 11/12, F04D 29/08, C22C 32/00, C04B 38/00

(54) **Materiau métallique ou céramique susceptible d'être usé par abrasion; pièces, carters, procédé d'élaboration dudit materiau**
Abreibbarer metallischer oder keramischer Werkstoff; Formkörper, Gehäuse die dieses Material enthalten sowie seine Herstellung
Abradable metallic or ceramic material; articles, casings comprising said material and its process for preparing

(30) Priorité: 14.06.2002 FR 0207339
(43) Date de publication de la demande: 17.12.2003
(73) Titulaire: SNECMA, 75015 Paris (FR); SNECMA SERVICES, 75015 Paris (FR)
(72) Inventeur: Braillard, Frédéric, 86100 Chatellerault (FR); Perruchaut, Philippe, 94140 Alfortville (FR); Ribot, Didier, 86220 Dange Saint-Romain (FR); Vigneau, Joël, 91750 Champcueil (FR)
(74) Mandataire: Le Roux, Martine

(56) Documents cités:
- EP-A- 0 751 104
- EP-A- 1 312 761
- WO-A-02/20426
- FR-A- 2 223 473
- US-A- 4 299 865
- US-A- 4 377 371
- US-A- 4 546 047

## Description

La présente invention a pour objet :
- un matériau métallique ou céramique susceptible d'être usé par abrasion, d'un type nouveau ;
- les pièces, notamment plaques, en ledit matériau ;
- les carters, dont la surface interne est, au moins en partie, revêtue de telles plaques ;
- un procédé d'élaboration dudit matériau.

La présente invention se situe pour partie dans le domaine des abradables métalliques. L'homme du métier parle ainsi des matériaux métalliques susceptibles d'être usés par abrasion.

Ce type de matériau est recherché, notamment pour être déposé à la surface interne de carters, à l'intérieur desquels évoluent des pièces tournantes (par exemple, du type aubes de compresseurs ou turbines). Ledit matériau est susceptible de se laisser usiner par les extrémités desdites pièces tournantes, lors d'interférences. On minimise ainsi les effets néfastes desdites interférences, tant au niveau de la structure desdites extrémités desdites pièces tournantes, qu'au niveau de ladite surface interne desdits carters.

Ce type de matériau doit avantageusement répondre au cahier des charges ci-après :
- il doit bien évidemment présenter une bonne abradabilité ;
- il doit en outre résister aux températures des milieux dans lesquels il est destiné à intervenir (500 à 1200°C, par exemple à l'intérieur des carters de moteurs d'avions) ;
- il doit aussi résister à l'érosion par chocs répétés de particules abrasives (détachées lors des interférences évoquées ci-dessus) ;
- ses coûts de fabrication et de mise en place doivent être aussi réduits que possible ;
- il est enfin, de préférence, auto-brasable.

Selon l'art antérieur, on propose principalement deux types d'abradables métalliques : ceux générés in situ par projection thermique (plasma, ...) de poudres métalliques et ceux qui présentent une structure en nid d'abeille et qui sont rapportés, brasés, sur les surfaces à protéger.

Ces deux types d'abradables métalliques ne donnent pas entière satisfaction, notamment en référence au cahier des charges ci-dessus.

Le premier type est associé à une technologie de projection de coût élevé, tant en raison du temps de projection, qu'en raison de la nécessité d'usiner après projection; pour bien maîtriser l'épaisseur du dépôt projeté.

Le second type a un champ d'application limité. Il ne convient que face à des lèchettes de labyrinthes ou d'aubes à talons.

Le brevet US 4,546,047 décrit une structure en nids d'abeilles, aux parois métalliques, dont lesdits nids d'abeilles sont remplis d'un matériau abradable.

La demande EP-A-0 751 104 décrit un joint abradable qui renferme des sphères d'alumino-silicate, vides, dans une matrice de phosphate d'aluminium.

Dans la demande de brevet FR-A-2 223 473, la structure de joints décrite, poreuse (la porosité en cause est une porosité ouverte), consiste en un alliage de nickel (le nickel y est toujours majoritaire (en poids)) qui renferme des oxydes (sciemment formés au cours de la seconde étape principale du procédé d'obtention dudit alliage). Ledit alliage de nickel est susceptible de renfermer du nitrure de bore. Ledit alliage est mis en oeuvre par remplissage de structures en nid d'abeilles.

Dans un tel contexte, les inventeurs de l'invention présentement revendiquée ont conçu et développé un matériau abradable métallique ou céramique, d'un type nouveau, qui répond au cahier des charges ci-dessus. Ledit matériau constitue le premier objet de la présente invention. Son utilisation, sous forme de pièces et notamment de plaques, tout particulièrement destinées à revêtir la surface interne de carters, constitue le second objet de ladite invention. Son procédé d'élaboration constitue le troisième objet de ladite invention. Ledit matériau est, au vu de l'art antérieur rappelé ci-dessus, tout à fait original et, en référence au cahier des charges énoncé ci-dessus, particulièrement performant.

Selon son premier objet, l'invention concerne donc un matériau métallique_ou céramique susceptible d'être usé par abrasion (un abradable) d'un type nouveau. Ledit matériau consiste principalement en un alliage à base de nickel et/ou de cobalt exempt d'oxyde ou en une céramique ; ledit alliage métallique ou ladite céramique présentant :
- réparties dans son volume, des particules de lubrifiant solide à un taux supérieur ou égal à 10 % en volume; et/ou
- répartis dans son volume, des pores fermés, lesdits pores conférant audit matériau une porosité inférieure au seuil de percolation

Le matériau de l'invention associe à une nature spécifique (il s'agit d'un alliage métallique à base de Ni et/ou Co exempt d'oxyde ou d'une céramique) des moyens lui conférant l'abradabilité recherchée (il s'agit de particules de lubrifiant à un taux conséquent et/ou, de pores fermés présents dans sa structure). Ces moyens sont susceptibles d'intervenir, pour l'obtention voire l'optimisation du résultat recherché, seuls ou en combinaison.

Les particules de lubrifiant solide rendent le matériau abradable de par une modification de sa composition, de sa nature intrinsèque, tandis que les pores internes le rendent abradable de par une modification de son état physique (le volume de matière concerné par les interférences est limité, donc l'effet néfaste desdites interférences est limité).

On associe, avantageusement, dans le volume du matériau de l'invention, des particules de lubrifiant solide et des pores.

Le matériau de l'invention peut également présenter, en sus desdites particules et/ou pores fermés, répartis à sa surface, des évidements dont les parois sont destinées à subir l'usure par abrasion. On associe très avantageusement, dans le volume dudit matériau et à sa surface destinée à subir l'usure par abrasion, respectivement, des particules de lubrifiant solide, des pores et des évidements.

Le lubrifiant solide, susceptible d'intervenir sous forme de particules dans la matrice du nouveau matériau de l'invention, doit bien évidemment être stable aux températures d'élaboration et d'utilisation dudit matériau. Il doit rester intégre, apte à exercer son action, et notamment ne pas réagir avec le matériau au sein duquel il intervient. En tout état de cause, il doit être et rester compatible avec l'alliage métallique ou la céramique au sein duquel il intervient, en quantité raisonnable.

Il doit par ailleurs intervenir sous une forme compatible avec le procédé d'élaboration du matériau de l'invention (voir plus loin). Il peut ainsi intervenir pré-conditionné, pré-aggloméré, pré-allié...

Les pores, susceptibles d'intervenir dans la matrice du nouveau matériau de l'invention, interviennent, en tout état de cause, en une quantité raisonnable conférant audit matériau une porosité fermée inférieure au seuil de percolation. Il convient de ne pas fragiliser outre mesure ledit matériau et en vue de son utilisation pour protéger une surface, de ne pas créer des accès directs à ladite surface.

On conçoit également que, lorsque des évidements sont ménagés à la surface du matériau de l'invention, ils le sont de manière judicieuse quant à leur taille et leur densité...

Les remarques ci-dessus mettent en avant tout l'intérêt qu'il peut y avoir à associer au moins deux des moyens ci-dessus, susceptibles de conférer de l'abradabilité au matériau recherché.

Selon une première variante, le matériau de l'invention est à base d'un alliage de nickel et/ou de cobalt. Un tel alliage renferme majoritairement, en poids, du nickel, du cobalt ou ensemble du nickel et du cobalt.

L'alliage en question est avantageusement du type NiCrAl ou du type MCrAIY avec M = Ni et/ou Co.

L'alliage en question n'est pas oxydé. Il est obtenu à l'issue d'un frittage, mis en oeuvre en atmosphère non oxydante (voir le procédé décrit ci-après). La présence d'oxyde(s) est préjudiciable en ce que lesdits oxydes sont susceptibles de conférer de l'abrasité au matériau (abrasité nuisible aux propriétés auto-lubrifiantes recherchées). Elle ne saurait résulter que de conditions opératoires non satisfaisantes et reste, en tout état de cause, minime.

Selon une seconde variante, le matériau de invention est à base d'une céramique. La céramique en question est avantageusement une céramique à base de zircone (ZrO₂), d'alumine (Al₂O₃) ou de carbure de silicium (SiC).

En référence au premier - les particules de lubrifiant solide - des moyens précisés ci-dessus, moyens aptes à conférer de l'abradabilité au matériau en cause, on peut préciser ce qui suit.

Lesdites particules de lubrifiant solide ont généralement un diamètre équivalent (il peut s'agir de particules sphériques ou anguleuses) compris entre 5 et 100 µm. Elles sont réparties, avantageusement uniformément réparties, dans le volume du matériau. Elles interviennent avantageusement isolées.

Il ne saurait toutefois être exclu d'en trouver, regroupées, en petites colonies. Lesdites colonies doivent bien évidemment rester petites pour respecter l'homogénéité du matériau. De telles petites colonies sont susceptibles de présenter un diamètre équivalent d'au plus 200 µm. L'homme du métier comprend aisément l'intérêt qu'il y a à optimiser la mise en oeuvre du procédé d'élaboration du matériau de l'invention, en vue de minimiser, d'éviter la formation de ces colonies ou agglomérats.

Lesdites particules de lubrifiant solide interviennent à un taux supérieur ou égal à 10 % en volume du matériau en cause. Elles interviennent bien évidemment en une quantité nécessaire (≥ 10 % en volume) à l'obtention de l'effet escompté (pour rendre abradable le matériau) mais aussi en une quantité raisonnable (généralement ≤ 40 % en volume) pour ne pas affecter de façon drastique les propriétés mécaniques du matériau. Lesdites particules de lubrifiant solide interviennent avantageusement à un taux compris entre 20 et 30 % en volume.

Lesdites particules de lubrifiant solide consistent généralement en des particules de nitrure de bore (BN) ou de graphite. Ces deux types de particules sont susceptibles d'intervenir dans une matrice en céramique ou en un alliage à base de cobalt ne renfermant pas de nickel. Au sein des alliages renfermant du nickel, on doit exclure l'intervention de particules de nitrure de bore car il existe un réel problème de compatibilité : le nickel est susceptible de réagir avec le bore.

En référence au second - les pores fermés - des trois moyens précisés ci-dessus, moyens aptes à conférer de l'abradabilité au matériau en cause, on peut préciser ce qui suit.

Lesdits pores sont fermés et confèrent au matériau une porosité inférieure au seuil de percolation. Ainsi, ils ne fragilisent pas outre mesure ledit matériau et ne laissent pas passer de débit de fuite dans l'épaisseur dudit matériau.

Lesdits pores fermés présentent avantageusement un diamètre équivalent compris entre 10 et 150 µm, très avantageusement entre 50 et 100µm.

Généralement, la porosité conférée audit matériau représente de 10 à 50 % de son volume.

En référence au moyen additionnel - les évidements de surface - des moyens précisés ci-dessus, moyens aptes à conférer de l'abradabilité au matériau en cause, on peut également préciser ce qui suit.

Lesdits évidements présentent avantageusement un diamètre équivalent compris entre 0,5 et 3 mm. Lesdits évidements ont généralement évidé la surface du matériau d'au moins 40 %...

En référence aux précisions données ci-dessus, quant à la quantité d'intervention de l'un ou l'autre desdits trois moyens, on précise ici que cette quantité dépend bien évidemment du mode d'intervention du moyen en cause, seul ou en combinaison avec l'un et/ou les deux autres moyens. Les effets de chacun desdits moyens, en référence à l'effet recherché, s'additionnent.

Selon une variante avantageuse, le matériau abradable de l'invention est en sus auto-brasable. Il renferme, en quantité efficace, des particules de matériau de brasage. Ladite quantité efficace est, en général, de 1 à 10 % en masse. En référence à la granulométrie desdites particules, on précise, de manière nullement limitative, que leur diamètre équivalent est généralement compris entre 1 et 50 µm.

Lesdites particules consistent avantageusement en des particules de silicium. Il peut également s'agir de particules de bore. Au sein d'un même matériau de l'invention, il peut tout à fait intervenir des particules de silicium et des particules de bore. On rappelle toutefois ici que le bore est susceptible de réagir avec le nickel. Des particules de bore n'interviennent donc pas au sein de matériaux de l'invention à base d'un alliage métallique renfermant du nickel. Elles sont tout à fait susceptibles d'intervenir au sein de matériaux de invention à base d'une céramique ou d'un alliage à base de cobalt ne renfermant pas de nickel.

L'intervention de particules de matériau de brasage au sein du matériau de l'invention rend ledit matériau, encore plus intéressant, en référence à son utilisation ultérieure. Ladite intervention, dans le procédé d'élaboration d'un matériau poreux, requiert une maîtrise particulière du procédé, qui reste toutefois à la portée de l'homme de l'art.

A la considération de la description ci-dessus du matériau de l'invention, l'homme du métier en aura inéluctablement saisi tout l'intérêt.

Le matériau de l'invention est susceptible d'être obtenu par des techniques de métallurgie des poudres. On précise ci-après un procédé d'élaboration dudit matériau qui repose sur de telles techniques.

Selon son deuxième objet, la présente invention concerne, comme indiqué précédemment, l'utilisation du matériau décrit ci-dessus, premier objet de ladite invention. Elle concerne, plus précisément :
- des pièces, notamment du type plaques, plates ou incurvées, en ledit matériau ; ainsi que
- des carters, destinés à renfermer des pièces tournantes, à haute température, dont la surface interne est, au moins en partie, revêtue (protégée par) de telles plaques, solidarisées à ladite surface interne par brasage ou auto-brasage.

Les pièces en question sont généralement des plaques destinées à être solidarisées à des surfaces. II n'est toutefois nullement exclu du cadre de l'invention que lesdites pièces présentent d'autres formes et/ou interviennent dans d'autres structures que les carters mentionnés ci-dessus.

Les carters en question sont avantageusement ceux renfermant des compresseurs haute pression, des turbines basse pression, voire haute pression, dans la structure de moteurs d'avions.

Lesdits carters présentant généralement des formes cylindriques ; leurs surfaces internes sont revêtues de plaques incurvées, au rayon de courbure adéquat.

La mise en place des plaques, sur la surface interne des carters, se fait par brasage, avantageusement par auto-brasage si lesdites plaques renferment dans leur structure la quantité adéquate de matériau de brasage.

On en vient maintenant au troisième objet de la présente invention, à savoir un procédé d'élaboration du nouveau matériau abradable, tel que décrit ci-dessus. Ledit procédé comprend :
- la réalisation d'un mélange intime d'une poudre de l'alliage métallique ou de la céramique en cause et d'un liant organique ; ledit mélange intime renfermant éventuellement, en sus, en quantité efficace, des particules de lubrifiant solide et/ou des particules de matériau de brasage ;
- le moulage dudit mélange par pressage ou injection dans un moule,
- l'extraction de l'ébauche moulée dudit moule ;
- le déliantage de ladite ébauche démoulée ;
- la densification par frittage, au moins partiel, de ladite ébauche déliantée ; ladite densification étant mise en oeuvre sur l'ébauche à base d'un alliage métallique en atmosphère non oxydante ;
les particules de lubrifiant solide et/ou la mise en oeuvre du frittage partiel conférant au matériau l'abradabilité recherchée (via respectivement lesdites particules de lubrifiant solide et/ou les pores résultant dudit frittage partiel) ; les particules de matériau de brasage le rendant, si elles interviennent, auto-brasable.

La(les) poudre(s) intervenante(s) - poudre de l'alliage métallique ou de la céramique en cause ; particules de lubrifiant solide et/ou particules de matériau de brasage, éventuellement - peuvent avoir des morphologies sphériques ou anguleuses, suivant leur mode d'élaboration, de telle sorte qu'elles facilitent la rétention de forme et la densification, lors des étapes ultérieures du procédé.

Il peut s'agir de poudres pré-alliées ou non... Ainsi, lorsque du graphite intervient à titre de lubrifiant solide, il est obligatoirement pré-aggloméré de façon à bien se mélanger à la poudre de l'alliage métallique ou de la céramique en cause et au liant.

La poudre d'alliage métallique ou de céramique est précurseur de la matrice, elle garantit les propriétés de résistance mécanique de l'ensemble. Ses grains présentent avantageusement un diamètre équivalent compris entre 10 et 70 µm, pour les grains d'alliage métallique (à base de nickel et/ou de cobalt), un diamètre équivalent compris entre 1 et 20 µm, pour les grains de céramique (par exemple, à base de ZrO₂, Al₂O₃ ou SiC).

Les particules de lubrifiant solide, lorsqu'elles interviennent, apportent l'abradabilité, au moins en partie. Elles interviennent généralement au taux indiqué en amont dans le présent texte (≥ 10 % en volume du matériau final), à la granulométrie indiquée en amont dans le présent texte (diamètre équivalent compris entre 5 et 100 µm). Lesdites particules peuvent notamment comprendre des grains de nitrure de bore (lorsqu'il n'y a pas de problème de compatibilité avec du nickel) et/ou des grains de graphite enrobé de métal. Elles peuvent notamment comprendre des grains de nitrure de bore, dont le diamètre équivalent est compris entre 5 et 30 µm et/ou des grains de graphite enrobés dont le diamètre équivalent est compris entre 30 et 90 µm. L'enrobage intervenant est évidemment compatible avec la matrice au sein de laquelle on vise à incorporer les grains de lubrifiant solide.

Les particules de matériau de brasage, lorsqu'elles interviennent en quantité efficace, confèrent au matériau final, son caractère auto-brasable. On a vu ci-dessus que ladite quantité efficace se situe généralement entre 1 à 10 % en masse, que lesdites particules présentent généralement un diamètre équivalent compris entre 1 et 50 µm, que le silicium est préféré à titre de matériau de brasage.

Selon une variante de mise en oeuvre du procédé de l'invention, le moulage est réalisé dans un moule qui présente des protubérances aptes à générer des évidements de surface. Lesdits évidements de surface additionnent leur effet, quant à l'abradabilité recherché, à ceux desdites particules de lubrifiant solide et/ou pores résultant du frittage partiel.

Le liant organique intervenant est classique, par exemple du type cire + polymère (polypropylène, notamment).

Le mélange intime de la poudre, des particules éventuellement présentes et du liant est avantageusement élaboré de la manière suivante :
- mélange de la poudre, des particules éventuellement présentes (préalablement mélangées entre elles, à froid) et du liant à une température comprise entre 150 et 200°C. A cette température, le liant intervenant doit présenter une viscosité adéquate ;
- refroidissement dudit mélange jusqu'à solidification ;
- broyage dudit mélange solidifié.

Le mélange intime réalisé - avantageusement obtenu sous forme de broyat - est alors moulé à la forme désirée (souvent celle d'une plaque, plate ou incurvée). On peut mettre en oeuvre un pressage ou une injection dans un moule adéquat, qui présente, si nécessaire, des protubérances et qui reproduit ladite forme désirée à une échelle supérieure à 1 (pour compenser le retrait lors des étapes ultérieures de densification). Ledit moule comporte avantageusement une double enveloppe, qui permet de chauffer ou de refroidir le mélange moulé, ce afin de simplifier le remplissage dudit moule, la prise en consistance du liant et/ou le démoulage. Cette étape de moulage permet d'obtenir la géométrie de pièce souhaitée. Elle permet, si le moule intervenant présente des protubérances, de générer les évidements de surface à la surface de la pièce moulée.

L'opération de moulage est avantageusement mise en oeuvre par injection (notamment par "métal injection molding"), par exemple dans les conditions ci-après : à une température comprise entre 150 et 200°C, pendant 15 à 60 s.

Cette opération de moulage est classiquement suivie des opérations de démoulage et de déliantage.

Le déliantage est évidemment adapté à la nature du liant en cause. Il est avantageusement mis en oeuvre en deux étapes. Selon cette variante avantageuse, il comprend successivement :
- un premier traitement par voie chimique, qui vise à extraire le liant de la pièce moulée obtenue par démoulage, à créer en son sein un réseau de microcanaux... Un tel premier traitement par voie chimique peut faire intervenir l'hexane (solvant du liant) en phase liquide, puis en phase vapeur ;
- un second traitement par voie thermique, qui complète et finalise le déliantage amorcé par voie chimique. Ledit second traitement par voie thermique est généralement mis en oeuvre entre 110 et 450°C (avec avantageusement une vitesse de montée en température lente) sous protection gazeuse adéquate (en atmosphère réductrice : hydrogène, par exemple). Ledit second traitement par voie thermique, qui finalise le déliantage, est avantageusement poursuivi pour préfritter la pièce. Les températures de préfrittage sont généralement comprises entre 500 et 1200°C. En mettant en oeuvre un tel préfrittage, on confère à la pièce moulée une ossature. Le traitement thermique peut ainsi comporter plusieurs cycles, durer de 10 à 50 heures. En tout état de cause, il est adapté à la nature du matériau en cause et à l'épaisseur de la pièce moulée.

La dernière étape consiste à densifier complètement ou partiellement la pièce démoulée. La densification partielle, par frittage partiel, vise à générer de la porosité au sein du matériau final. On a vu qu'une telle porosité peut être recherchée, en référence à l'abradabilité souhaitée. On conçoit qu'elle peut être superflue si l'abradabilité repose' sur l'intervention de particules de lubrifiant solide et/ou sur la présence d'évidements de surface. L'homme du métier sait contrôler le frittage mis en oeuvre en fonction de la porosité escomptée, notamment par un contrôle des vitesses de montée et de descente en température, des temps de palier et d'une température seuil. La gamme de température de frittage s'étend généralement de 1 100 à 1 500°C, plus fréquemment de 1 100 à 1 350°C.

Le frittage est mis en oeuvre en atmosphère non oxydante, généralement sous vide ou sous faible pression partielle d'un gaz protecteur adéquat (argon ou hydrogène, par exemple. L'intervention de l'hydrogène est particulièrement préconisée pour éviter toute oxydation) dans le contexte de l'élaboration d'un matériau à base d'un alliage métallique. Dans le contexte de l'élaboration d'un matériau à base d'une céramique, il peut être mis en oeuvre en atmosphère oxydante ou non.

Cette dernière étape de densification du matériau obtenu - de la pièce démoulée - peut être mise en oeuvre aussi bien directement sur ledit matériau, démoulé, refroidi (avantageusement préfritté dans le moule) que sur celui-ci, déjà solidarisé à un support. Dans cette seconde hypothèse, on met alors successivement en oeuvre la densification et le brasage ou auto-brasage dudit matériau sur le support.

Le procédé décrit ci-dessus est à base d'un procédé par analogie, procédé de métallurgie des poudres, modifié par au moins une originalité de mise en oeuvre, au niveau de la nature de la matière à mouler et/ou de la forme du moule et/ou de l'étape finale de densification.

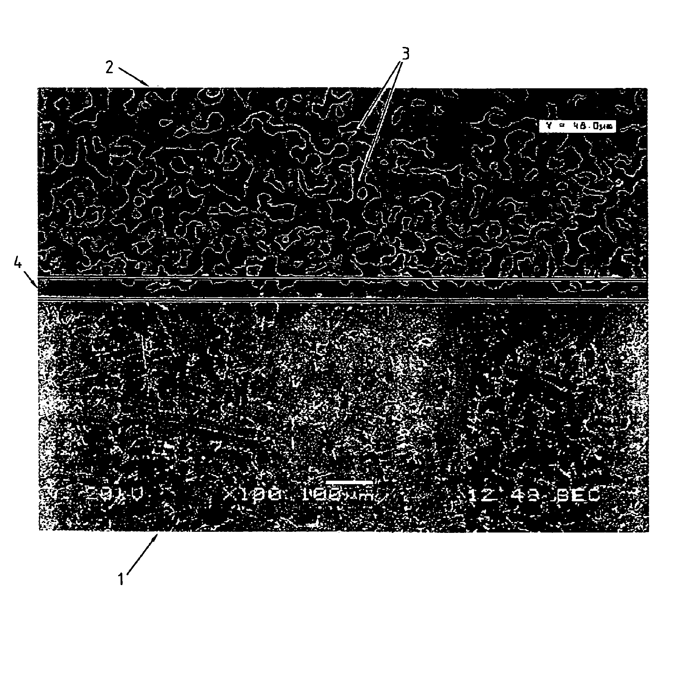

On se propose maintenant d'illustrer, de façon nullement limitative, les principaux aspects de l'invention (produit, procédé) par :
- la figure annexée,
- l'exemple ci-après.

Ladite figure est un cliché d'un matériau de l'invention (grossissement 100), brasé sur un substrat métallique en KC24NWTa (MarM 509). Ledit matériau - alliage CoNiCrAIY non oxydé, rendu auto-brasable par des particules de Si - est susceptible d'être usé par abrasion du fait de sa porosité. Les pores sont répartis de façon homogène, leur fraction volumique est d'environ 30 %. On a représenté :
- en 1, la plaque sur laquelle le matériau de l'invention est auto-brasé ;
- en 2, ledit matériau de l'invention ;
- en 3, les pores (zones noires) fermés, dans la structure dudit matériau ;
- en 4, la zone de brasure.

Ledit matériau de l'invention a été obtenu comme précisé dans l'exemple ci-après.

### EXEMPLE

Dans une première étape, on a mélangé intimement deux poudres métalliques, par simple mélange. On aurait pu tout aussi bien opérer ce mélange par mécanosynthèse. Les poudres en question sont :
- une poudre de CoNiCrAIY (% en masse : Co 38 %, Ni 32 %, Cr 22 %, Al 7,5 %, Y 0,5 %), dont les grains présentent un diamètre équivalent de 35 µm, qui intervient pour 98 % en masse ;
- une poudre de silicium, dont les grains présentent un diamètre équivalent de 10 µm, qui intervient pour 2 % en masse.

On a ensuite ajouté audit mélange intime un liant organique, constitué de cire et de polypropylène. Ledit liant intervient à raison de 35 % en volume, pour 65 % en volume du mélange de poudres.

Il est chauffé à 180°C de façon à acquérir un état pâteux et à être parfaitement homogène.

Il est ensuite refroidi, découpé, puis finalement broyé pour générer un granulat.

Le granulat obtenu est introduit dans la machine à injecter et chauffé à 180°C.

Le mélange ainsi chauffé est alors injecté dans la cavité d'un moule métallique présentant une forme adéquate (forme de plaque).

Après 1 min, ledit moule est ouvert et la pièce moulée est extraite.

Le déliantage est mis en oeuvre en deux étapes sous hydrogène. Dans une première étape, on fait agir chimiquement de l'hexane, jusqu'à élimination quasi complète de la cire. Dans une seconde étape, on pyrolyse le polypropylène dans une atmosphère d'hydrogène. La température est montée lentement, puis maintenue à 400°C pendant 2 heures.

Après ce pallier à 400°C, ladite température est montée lentement jusqu'a 1000°C. Elle est maintenue à cette valeur pendant 10 minutes, pour préfritter la pièce moulée. Ce cycle de préfrittage (sous hydrogène) dure 32 heures.

La pièce préfrittée est refroidie.

Elle est alors mise en place sur son support, par fixation par points de soudure.

Sur ledit support, elle est alors traitée thermiquement sous vide, pour assurer successivement sa densification partielle (on veut générer un matériau poreux) et son auto-brasage.

Elle est en fait remise en température à 1260°C, pendant 2 heures, pour densification partielle contrôlée, puis laissée 1 heure à un premier pallier de 1180°C, 1 heure à un second pallier de 1160°C, pour permettre le traitement de diffusion dans le matériau support.

La porosité de la pièce finale, solidarisée à son support, apparaît clairement sur la figure annexée.

## Revendications

1. Matériau métallique ou céramique susceptible d'être usé par abrasion, **caractérisé en ce qu'**il consiste principalement en un alliage métallique à base de nickel et/ou de cobalt exempt d'oxyde ou en une céramique ; ledit alliage métallique ou ladite céramique présentant :
- réparties dans son volume, des particules de lubrifiant solide à un taux supérieur à 10 % en volume; et/ou
- répartis dans son volume, des pores fermés, lesdits pores conférant audit matériau une porosité inférieure au seuil de percolation.

2. Matériau selon la revendication 1, **caractérisé en ce que** ledit alliage métallique ou ladite céramique présentent, répartis dans son volume, des particules de lubrifiant solide et des pores fermés.

3. Matériau selon une des revendications 1 ou 2, **caractérisé en ce que** ledit alliage métallique ou ladite céramique présente, en outre :
- répartis à sa surface, des évidements dont les parois sont destinées à subir l'usure par abrasion.

4. Matériau selon l'une quelconque des revendications 1 à 3, **caractérisé en ce qu'**il consiste en un alliage métallique du type NiCrAI ou MCrAIY avec M = Ni et/ou Co.

5. Matériau selon l'une quelconque des revendications 1 à 3, **caractérisé en ce qu'**il consiste en une céramique à base de zircone (ZrO₂), d'alumine (Al₂O₃), ou de carbure de silicium (SiC).

6. Matériau selon l'une quelconque des revendications 1 à 5, **caractérisé en ce que** lesdites particules de lubrifiant solide ont un diamètre équivalent compris entre 5 et 100 µm.

7. Matériau selon l'une quelconque des revendications 1 à 6, **caractérisé en ce que** lesdites particules de lubrifiant solide consistent en des particules de nitrure de bore (BN) ou de graphite, ledit nitrure de bore (BN) n'intervenant toutefois pas au sein d'un alliage métallique renfermant du nickel (Ni).

8. Matériau selon l'une quelconque des revendications 1 à 7, **caractérisé en ce que** lesdits pores fermés présentent un diamètre équivalent compris entre 10 et 150 µm.

9. Matériau selon l'une quelconque des revendications 1 à 8, **caractérisé en ce que** ledit alliage métallique ou ladite céramique présente une porosité de 10 à 50 % en volume.

10. Matériau selon l'une quelconque des revendications 3 à 9, **caractérisé en ce que** lesdits évidements en surface présentent un diamètre équivalent compris entre 0,5 et 3 mm.

11. Matériau selon l'une quelconque des revendications 1 à 10, **caractérisé en ce que** ledit alliage métallique ou ladite céramique renferme des particules de matériau de brasage en une quantité efficace, de sorte qu'il est auto-brasable.

12. Matériau selon la revendication 11, **caractérisé en ce que** ledit matériau de brasage consiste en du silicium (Si) et/ou du bore (B).

13. Pièces, notamment du type plaques, plates ou incurvées, en un matériau selon l'une quelconque des revendications 1 à 12.

14. Carters, destinés à renfermer des pièces tournantes, à haute température, **caractérisés en ce que** leurs surfaces internes sont revêtues, au moins en partie, de plaques selon la revendication 13, solidarisées à leurs dites surfaces internes par brasage ou autobrasage.

15. Procédé d'élaboration d'un matériau selon l'une quelconque des revendications 1 à 12, **caractérisé en ce qu'**il comprend :
- la réalisation d'un mélange intime d'une poudre de l'alliage métallique ou de la céramique en cause et d'un liant organique ; ledit mélange intime renfermant éventuellement, en sus, en quantité efficace, des particules de lubrifiant solide et/ou des particules de matériau de brasage ;
- le moulage dudit mélange par pressage ou injection dans un moule ;
- l'extraction de l'ébauche moulée dudit moule ;
- le déliantage de ladite ébauche démoulée ;
- la densification par frittage, au moins partiel, de ladite ébauche déliantée ; ladite densification étant mise en oeuvre sur l'ébauche à base d'un alliage métallique en atmosphère non oxydante ;
lesdites particules de lubrifiant solide et/ou la mise en oeuvre du frittage partiel conférant au matériau l'abradabilité recherchée ; lesdites particules de matériau de brasage le rendant, si elles interviennent, auto-brasable.

16. Procédé selon la revendication 15, **caractérisé en ce que** ladite poudre de l'alliage métallique est constituée de grains dont le diamètre équivalent est compris entre 10 et 70 µm.

17. Procédé selon la revendication 15, **caractérisé en ce que** ladite poudre de céramique est constituée de grains dont le diamètre équivalent est compris entre 1 et 20 µm.

18. Procédé selon l'une quelconque des revendications 15 à 17, **caractérisé en ce que** ledit moulage est mis en oeuvre dans un moule qui présente des protubérances aptes à générer des évidements de surface.

## Claims

1. A metallic or ceramic material able to be worn away by abrasion, **characterized in that** it principally consists of a metal alloy based on nickel and/or cobalt which is free of oxide or of a ceramic; said metal alloy or said ceramic having:
• particles of solid lubricant distributed through its volume, in an amount that is 10% by volume or more; and/or
• closed pores distributed through its volume, said pores endowing said material with a porosity that is less than a percolation threshold.

2. The material according to claim 1, **characterized in that** said metal alloy or said ceramic has particles of solid lubricant and closed pores distributed through its volume.

3. The material according to claim 1 or claim 2, **characterized in that** said metal alloy or said ceramic also has :
• recesses distributed in its surface, the walls of which are intended to undergo wear by abrasion.

4. The material according to any one of claims 1 to 3, **characterized in that** it consists of an NicrAl type metal alloy or a MCrAIY type metal alloy in which M = Ni and/or Co.

5. The material according to any one of claims 1 to 3, **characterized in that** it consists of a ceramic based on zirconia (Zr0₂), alumina (Al₂O₃) or silicon carbide (SiC).

6. The material according to any one of claims 1 to 5, **characterized in that** the equivalent diameter of said particles of solid lubricant is in the range 5 µm to 100 µm.

7. The material according to any one of claims 1 to 6, **characterized in that** said particles of solid lubricant consist of particles of boron nitride (BN) or graphite, said boron nitride (BN) not being used in a metal alloy containing nickel (Ni).

8. The material according to any one of claims 1 to 7, **characterized in that** the equivalent diameter of said closed pores is in the range 10 µm to 150 µm.

9. The material according to any one of claims 1 to 8, **characterized in that** the porosity of said metal alloy or said ceramic is 10% to 50% by volume.

10. The material according to any one of claims 3 to 9, **characterized in that** the equivalent diameter of said surface recesses is in the range 0.5 mm to 3 mm.

11. The material according to any one of claims 1 to 10, **characterized in that** said metal alloy or said ceramic comprises particles of a brazing material in an effective quantity, such that it is self-brazable.

12. The material according to claim 11, **characterized in that** said brazing material consists of silicon (Si) and/or boron (B).

13. Parts, in particular of the flat or curved plate type, formed from a material according to any one of claims 1 to 12.

14. Casings intended to contain revolving parts at high temperatures, **characterized in that** their inner surfaces are at least partially covered with plates according to claim 13 affixed to their inner surfaces by brazing or self-brazing.

15. A process for producing a material according to any one of claims 1 to 12, **characterized in that** it comprises:
• forming an intimate mixture of a powder of the metal alloy or the ceramic in question and an organic binder; said intimate mixture optionally additionally including an effective quantity of particles of solid lubricant and/or particles of brazing material;
• molding said mixture by pressing or injection into a mold;
• extracting the molded blank from said mold;
• unbinding said unmolded blank;
• densification by at least partial sintering of said blank following unbinding; said densification being carried out in a non-oxidizing atmosphere for the blank based on a metal alloy;
said particles of solid lubricant and/or carrying out partial sintering endowing the material with the desired abradability; said particles of brazing material, if used, rendering it self-brazable.

16. The process according to claim 15, **characterized in that** said metal alloy powder is constituted by grains with an equivalent diameter in the range 10 µm to 70 µm.

17. The process according to claim 15, **characterized in that** said ceramic powder is constituted by grains with an equivalent diameter in the range 1 µm to 20 µm.

18. The process according to any one of claims 15 to 17, **characterized in that** said molding is carried out in a mold which exhibits protuberances able to generate surface recesses.

## Patentansprüche

1. Metall- oder Keramikmaterial, das geeignet ist, durch Abrasion verschlissen zu werden, **dadurch gekennzeichnet, daß** es hauptsächlich aus einer oxidfreien Metallegierung auf Nickel- und/oder Kobaltbasis oder aus einer Keramik besteht;
wobei die Metallegierung oder die Keramik folgendes aufweist:
- in ihrem Volumen verteilte Festschmierstoffteilchen mit einem Anteil von mehr als 10 Vol.-%; und/oder
- in ihrem Volumen verteilte geschlossene Poren, wobei die Poren dem Material eine Porosität unter der Perkolationsschwelle verleihen.

2. Material nach Anspruch 1, **dadurch gekennzeichnet, daß** die Metallegierung oder die Keramik in ihrem Volumen verteilt Festschmierstoffteilchen und geschlossene Poren aufweist.

3. Material nach einem der Ansprüche 1 oder 2, **dadurch gekennzeichnet, daß** die Metallegierung oder die Keramik ferner folgendes aufweist:
- an ihrer Oberfläche verteilte Ausnehmungen, deren Wände dazu bestimmt sind, durch Abrasion verschlissen zu werden.

4. Material nach irgendeinem der Ansprüche 1 bis 3, **dadurch gekennzeichnet, daß** es aus einer Metallegierung vom Typ NiCrAl oder MCrAIY mit M = Ni und/oder Co besteht.

5. Material nach irgendeinem der Ansprüche 1 bis 3, **dadurch gekennzeichnet, daß** es aus einer Keramik auf der Basis von Zirkonoxid (Zr0₂), Aluminiumoxid (Al₂O₃) oder Siliziumkarbid (SiC) besteht.

6. Material nach irgendeinem der Ansprüche 1 bis 5, **dadurch gekennzeichnet, daß** die genannten Festschmierstoffteilchen einen Äquivalentdurchmesser zwischen 5 und 100 µm aufweisen.

7. Material nach irgendeinem der Ansprüche 1 bis 6, **dadurch gekennzeichnet, daß** die Festschmierstoffteilchen von Partikeln aus Bornitrid (BN) oder Graphit gebildet sind, wobei Bornitrid (BN) jedoch nicht innerhalb einer Nickel (Ni) enthaltenden Metallegierung vorkommt.

8. Material nach irgendeinem der Ansprüche 1 bis 7, **dadurch gekennzeichnet, daß** die geschlossenen Poren einen Äquivalentdurchmesser zwischen 10 und 150 µm aufweisen.

9. Material nach irgendeinem der Ansprüche 1 bis 8, **dadurch gekennzeichnet, daß** die Metallegierung oder die Keramik eine Porosität zwischen 10 und 50 Vol.-% aufweist.

10. Material nach irgendeinem der Ansprüche 3 bis 9, **dadurch gekennzeichnet, daß** die Oberflächenausnehmungen einen Äquivalentdurchmesser von 0,5 bis 3 mm aufweisen.

11. Material nach irgendeinem der Ansprüche 1 bis 10, **dadurch gekennzeichnet, daß** die Metallegierung oder die Keramik Lötmaterialteilchen in einer wirkungsvollen Menge enthält, so daß sie selbstlötbar ist.

12. Material nach Anspruch 11, **dadurch gekennzeichnet, daß** das Lötmaterial aus Silizium (Si) und/oder aus Bor (B) besteht.

13. Teile, insbesondere vom Typ flache oder gekrümmte Platten, aus einem Material nach irgendeinem der Ansprüche 1 bis 12.

14. Gehäuse, die dazu bestimmt sind, umlaufende, heiße Teile aufzunehmen, **dadurch gekennzeichnet, daß** ihre Innenflächen wenigstens teilweise mit Platten nach Anspruch 13 verkleidet sind, die mit deren genannten Innenflächen durch Löten oder Selbstlöten fest verbunden sind.

15. Verfahren zur Herstellung eines Materials nach irgendeinem der Ansprüche 1 bis 12, **dadurch gekennzeichnet, daß** es folgendes umfaßt:
- das Herstellen einer innigen Mischung aus einem Pulver der betreffenden Metallegierung oder Keramik und einem organischen Bindemittel; wobei die innige Mischung eventuell zusätzlich in wirkungsvoller Menge Festschmierstoffteilchen und/oder Lötmaterialteilchen enthält;
- das Formen der genannten Mischung durch Einpressen oder Einspritzen in eine Form;
- das Ausformen des geformten Rohlings;
- das Entbindern des ausgeformten Rohlings;
- das Verdichten durch wenigstens teilweises Sintern des entbinderten Rohlings;
wobei das Verdichten an dem Rohling auf Basis einer Metallegierung in nicht oxidierender Atmosphäre vollzogen wird;
wobei die Festschmierstoffteilchen und/oder das Durchführen der teilweisen Sinterung dem Material die gewünschte Abriebfähigkeit verleiht; wobei die Lötmaterialteilchen, wenn sie vorkommen, es selbstlötbar machen.

16. Verfahren nach Anspruch 15, **dadurch gekennzeichnet, daß** das Pulver aus der Metallegierung von Körnern gebildet ist, deren Äquivalentdurchmesser zwischen 10 und 70 µm liegt.

17. Verfahren nach Anspruch 15, **dadurch gekennzeichnet, daß** das Keramikpulver von Körnern gebildet ist, deren Äquivalentdurchmesser zwischen 1 und 20 µm liegt.

18. Verfahren nach irgendeinem der Ansprüche 15 bis 17, **dadurch gekennzeichnet, daß** das Formen in einer Form durchgeführt wird, die Ausbauchungen aufweist, welche geeignet sind, Oberflächenausnehmungen zu erzeugen.
